# EUROPEAN PATENT APPLICATION

(11) **EP 4 585 294 A2**
(43) Date of publication of application: **16.07.2025**
(21) Application number: 24307195.8
(22) Date of filing: 19.12.2024
(51) Int. Cl.: B01D 53/047

(54) **PRESSURE SWING ADSORPTION WITH DUAL-FEED, THREE PRODUCT STREAMS**

(30) Priority: 22.12.2023 FR 2315097
(71) Applicant: Technip Energies France, 92741 Nanterre Cedex (FR)
(72) Inventor: ELSEVIERS, Wim, 92741 Nanterre Cedex (FR)
(74) Representative: Edson, Russell Gregory

(57) **Abstract**

A method for producing a plurality of product gas streams by a pressure swing adsorption (PSA) unit is described. The method comprises: receiving a first feed gas stream having a first pressure; receiving a second feed gas stream having a second pressure that is lower than the first pressure; producing at least a first product stream, a second product stream, and a third product stream without compressing the second feed gas stream to a pressure level corresponding to the first pressure.

## Description

### Technical Field

The present disclosure relates to a method. Aspects of the invention relate to a method, a pressure swing adsorption (PSA) unit and to a hydrogen plant.

### Background

A pressure swing adsorption (PSA) unit can be used for the final purification of hydrogen in a hydrogen plant based on reforming fossil fuel with steam. Inert gases entering with the fossil fuel can be present in the syngas feed to the PSA unit. It is typically desired to avoid these impurities from slipping into the hydrogen product from the PSA unit as they reduce the hydrogen purity. As such, these impurities are rejected to the PSA purge gas that can be used as a fuel. While carbon dioxide (CO2) can be removed upstream or downstream of the PSA unit, unconverted carbon monoxide (CO) and methane (CH4) from the syngas can be rejected to the PSA purge gas fuel stream, where they can increase the carbon intensity of the hydrogen production process when they are converted into CO2 during combustion. With the goal of reaching very low carbon intensity hydrogen production processes, hydrogen production flow schemes can apply a recycle of the PSA purge gas to the reformer feed section, recycling the unconverted CO and CH4 as feed to generate additional hydrogen. This recycle step can also recycle the inert gases (e.g., nitrogen, argon, etc.) that can accumulate in the hydrogen plant recycle loop. For processes where high purity hydrogen is used (e.g., 99.9 or 99.99 % pure hydrogen), this can result in an accumulation by a factor 10 to 100 of the inert gases, making the separation by the PSA unit more difficult, resulting in larger PSA adsorbent bed volumes and reduced hydrogen recovery, and requiring more feed consumption for a fixed hydrogen production.

A PSA unit in hydrogen purification can generate two product streams: (1) purified hydrogen product stream and (2) PSA purge gas stream containing unrecovered hydrogen and rejected feed gas impurities.

Impurities such as nitrogen and argon can be among the least adsorbable impurities that the PSA unit can remove. These impurities can accumulate in the top of adsorber beds in the PSA unit. During the internal depressurization steps of the PSA process, the impurities can desorb first and leave from the top of the adsorber beds. The internal depressurization steps are also the steps in which hydrogen is recovered and that cause the high hydrogen recovery of the PSA process. For plants in which the PSA purge gas is recycled, venting the gas released during the depressurization steps may eliminate a substantial amount of inert gases from the recycle loop, but can simultaneously lose more hydrogen during the process.

In some PSA processes, part of the gas released from a co-current depressurization step can be rejected into a third product stream from the PSA unit, which can be in addition to the two product streams generated by the PSA process. The third product stream from the PSA unit also contains a substantial amount of hydrogen that may not be recovered to the purified hydrogen product stream, which can result in a loss of efficiency of the hydrogen production process.

A PSA unit can process mixtures of hydrogen-rich feed gas originating from multiple sources, but the feed streams need to be available at the high pressure of the PSA adsorption step. Hydrogen-rich feed streams available at a lower pressure require an additional compression step to the higher-pressure level of the PSA unit adsorption step before they can be mixed with the other feed stream(s) in the PSA unit. Recovering high-purity hydrogen from two streams, one of which is generated by a steam reforming process without removal of the CO2 upstream of the PSA unit and available at the normal feed pressure of the PSA unit, and a second stream that is rich in hydrogen and lean in heavily-adsorbable components, but available at a pressure that is less than the normal feed pressure of the PSA unit, typically at a pressure only 30% to 60% of the normal feed pressure, requires the compression of the second stream to the normal feed pressure.

### Statements

According to an aspect, there is provided a method for producing a plurality of product gas streams by a pressure swing adsorption (PSA) unit, the method comprising: receiving a first feed gas stream having a first pressure; receiving a second feed gas stream having a second pressure that is lower than the first pressure; producing at least a first product stream, a second product stream, and a third product stream without compressing the second feed gas stream to a pressure level corresponding to the first pressure.

The first feed gas stream may comprise non-adsorbed components, least adsorbable components that include inert gases, less adsorbable components that include methane, and heavily adsorbable components that include carbon dioxide.

The second feed gas stream may comprise non-adsorbed or least adsorbable components.

The non-adsorbed components may comprise hydrogen and helium. The least adsorbable components may comprise one or more of nitrogen, oxygen and argon. The less adsorbable components may comprise one or more of carbon monoxide and methane. The least adsorbable components may comprise one or more of water, carbon dioxide and hydrocarbons heavier than methane.

Producing at least the first product stream, the second product stream, and the third product stream without compressing the second feed gas stream to the pressure level corresponding to the first pressure may comprise one or more of the following: recovering the non-adsorbed components with a high purity to the first product stream; recovering least adsorbable components to the second product stream at a pressure level that is lower than the pressure of the first product stream; and rejecting remaining components and non-recovered, non-adsorbing components to the third product stream at another pressure lever that is lower than the pressure of the second product stream.

The method may further comprise processing the first feed gas stream and the second feed gas stream according to a PSA process that may include steps selected from the group consisting of: adsorption of impurities from feed gas at high pressure; a first co-current depressurization and pressure equalization; a second co-current depressurization and providing purge; a third co-current depressurization and vent; counter-current depressurization and blowdown; counter-current purging; co-current or counter-current repressurization and pre-pressurization; counter-current repressurization and pressure equalization; counter-current repressurization and final repressurization with product gas; and co-current repressurization and final repressurization with feed gas.

The method may comprise the adsorption of impurities step. The impurities may be adsorbed from the first feed gas stream at a high pressure. The step may include generating the first product stream at a high pressure.

The method may comprise the counter-current depressurization and blowdown step to generate a first part of the second product stream at a low pressure.

The method may comprise the counter-current purging step to generate a second part of the second product stream at a low pressure.

The method may comprise the co-current or counter-current repressurization and pre-pressurization step using the second feed gas stream that has a pressure lower than a pressure of the first feed gas stream.

The method may comprise the counter-current repressurization and final repressurization step. The counter-current repressurization and final repressurization step may be with the first product stream.

The method may comprise the co-current repressurization and final repressurization step. The co-current repressurization and final repressurization step may be with the first feed gas stream.

The method may comprise the counter-current purging step. At least part of the second feed gas stream that has a pressure lower than the pressure of the first feed gas stream may be used during the counter-current purging step to generate a second part of the second product stream at a low pressure.

The PSA unit may be installed in a hydrogen plant.

The hydrogen plant may include a temperature-swing adsorption dryer system integrated therein for recovering waste heat and water vapor. The method may further include one or more of: receiving, by the temperature-swing adsorption dryer system, regeneration gas from a downstream unit of the hydrogen plant; using, by the temperature-swing adsorption dryer system, heat from the hydrogen plant to heat at least a part of the regeneration gas and form spent regeneration gas through a heating step and a cooling step; recycling spent regeneration gas back to the hydrogen plant that uses heat from the spent regeneration gas and the cooling step; and using desorbed water in the spent regeneration gas as process steam in the hydrogen plant.

The PSA unit may be a two-feed, three product PSA unit.

According to an aspect, there is provided a pressure swing adsorption (PSA) unit comprising: one or more inlets for introducing a first feed gas stream and a second feed gas stream into one or more vessels of the PSA unit, the first feed gas stream having a first pressure and the second feed gas stream having a second pressure that is lower than the first pressure; at least one adsorbent bed provided in a vessel, the at least one adsorbent bed configured to adsorb components of the first feed gas stream and/or the second feed gas stream; one or more outlets for exhausting at least a first product stream, a second product stream and a third product stream from the one or more vessels; wherein the PSA unit is configured such that the first product stream, second product stream and third product stream are generated from the first and second feed gas streams without compressing the second feed gas stream to a pressure level corresponding to the first pressure.

The PSA unit may be configured to carry out any and all of the process steps described herein.

According to a further aspect, there is provided a hydrogen plant comprising the PSA unit of the previous aspect.

The hydrogen plant may be configured to carry out any and all of the process steps described herein.

According an aspect, there is provided a method for producing a plurality of product gas streams by a pressure swing adsorption (PSA) unit in a hydrogen plant, the method comprising: receiving a first feed gas stream having a first pressure; receiving a second feed gas stream having a second pressure that is lower than the first pressure; producing at least a first product stream, a second product stream, and a third product stream without compressing the second feed gas stream to a pressure level corresponding to the first pressure.

The first feed gas stream may include non-adsorbed components, least adsorbable components that include inert gases, less adsorbable components that include methane, and heavily adsorbable components that include carbon dioxide. The second feed gas stream may include non-adsorbed or least adsorbable components.

Producing at least the first product stream, the second product stream, and the third product stream without compressing the second feed gas stream to the pressure level corresponding to the first pressure may comprise: recovering the non-adsorbed components with a high purity to the first product stream; recovering least adsorbable components to the second product stream at a pressure level that is lower than the pressure of the first product stream; and rejecting remaining components and non-recovered, non-adsorbing components to the third product stream at another pressure lever that is lower than the pressure of the second product stream.

The method may further comprise processing the first feed gas stream and the second feed gas stream according to a process that includes steps selected from the group consisting of: adsorption of impurities from feed gas at high pressure; a first co-current depressurization and pressure equalization; a second co-current depressurization and providing purge; a third co-current depressurization and vent; counter-current depressurization and blowdown; counter-current purging; counter-current repressurization and pre-pressurization; counter-current repressurization and pressure equalization; counter-current repressurization and final repressurization with product gas; and co-current repressurization and final repressurization with feed gas.

The hydrogen plant may include a temperature-swing adsorption dryer system integrated therein for recovering waste heat and water vapor. The method may further comprise: receiving, by the temperature-swing adsorption dryer system, regeneration gas from a downstream unit of the hydrogen plant; using, by the temperature-swing adsorption dryer system, heat from the hydrogen plant to heat the regeneration gas and form spent regeneration gas through a heating step and a cooling step; recycling spent regeneration gas back to the hydrogen plant that uses heat from the spent regeneration gas and the cooling step; and using desorbed water from the spent regeneration gas as process steam in the hydrogen plant.

The PSA unit may be a two-feed, three product PSA unit.

### Brief Description of the Drawings

One or more examples will now be described, by way of example only, with reference to the accompanying drawings, in which:
Figure 1 shows a flow diagram of a PSA unit according to an example of the disclosure;
Figure 2 shows a block diagram of a PSA unit according to an example of the disclosure;
Figure 3 shows a block diagram of a PSA unit according to an example of the disclosure;
Figure 4 shows a block diagram of a PSA unit according to an example of the disclosure;
Figure 5 shows a block diagram of a PSA unit according to an example of the disclosure;
Figure 6 shows a block diagram of a hydrogen plant according to an example of the disclosure;
Figure 7 shows a block diagram of a hydrogen plant according to an example of the disclosure.

### Detailed Description

Certain aspects and features of the present disclosure relate to a process for a pressure-swing adsorption (PSA) unit that can have two feed streams and three product streams, that avoids requiring compression of one of the feed streams, and that maintains or increases PSA product purity or hydrogen recovery from the main feed gas stream. The PSA unit described herein may be described as a two feed three product PSA unit or a dual feed three product PSA unit. It will be appreciated that the terms may be used interchangeably. In some arrangements, the PSA unit described herein may be fed with exactly two feed streams. In some arrangements, the PSA unit may be configured to generate exactly three product streams during normal operation. For example, a second stream can be used in the PSA unit, without requiring additional compression. The PSA process can reject the least adsorbable components in an additional (for example a third) product stream at intermediate pressure to maintain high-purity hydrogen. In some examples, the second feed stream is generated by processing a PSA purge gas stream in another treatment unit. The impact of the reduced hydrogen recovery caused by generating the third product stream can be compensated by the second feed stream.

A process for a PSA unit according to some examples can treat a first feed gas stream and a second feed gas stream (available at a lower pressure than the first feed gas stream) without compressing the second feed gas stream to the pressure level of the first feed gas stream. The PSA unit described is configured such that the first feed gas stream and second feed gas stream can be treated without compressing the second feed gas stream. In this way, the PSA process does not require or include a compression step. The PSA unit or PSA system does not require or include a compressor. The PSA unit includes one or more inlets for introducing a first feed gas stream and a second feed gas stream into one or more vessels of the PSA unit, the first feed gas stream having a first pressure and the second feed gas stream having a second pressure that is lower than the first pressure. In some arrangements, two separate inlets are provided for each feed gas stream. This allows the feed gases to be introduced into different locations of the PSA unit and/or at different stages of the PSA process. In addition, the feed gases can be generated and provided from different locations, for example from different streams or units of a hydrogen plant. The PSA unit includes at least one adsorbent bed (for example provided in one or more vessels of the PSA unit). The adsorbent bed(s) is (are) configured to adsorb and/or desorb components of the first feed gas stream and/or the second feed gas stream (for example in dependence on the operating pressure in the respective vessel). In some arrangements, the PSA unit includes a plurality of vessels. At least one adsorbent bed may be provided in each of the vessels. The adsorbent beds in each vessel may be in the same configuration as one another, for example may include the same adsorbent materials and/or materials that are arranged in the same order from bottom to top of the vessel, and/or the same materials in the same volumetric quantities in each adsorbent bed. The plurality of vessels may have substantially the same dimensions.

The first feed gas stream can include non-adsorbed components (such as hydrogen), and can also contain least adsorbable components (such as inert gases), less adsorbable components (such as carbon monoxide and methane), and heavily adsorbable components (such as carbon dioxide, water, or others such as heavier hydrocarbons) at a high pressure. The second feed gas stream can include non-adsorbed or least adsorbable components, but has lower levels of less adsorbable and heavily adsorbable components compared with the first feed gas stream. The second feed gas stream is provided to the PSA unit at a pressure lower than the pressure at which the first feed gas stream is provided.

Most of the non-adsorbed components can be recovered to a first product stream at high pressure. The first product stream may be at a pressure close to or substantially the same as the pressure of the first feed gas stream. Most of the least adsorbable components can be recovered to a second product stream at intermediate pressure (for example less than, for example less than half of, the "high pressure" of the first feed gas stream). The remaining least, less, and heavily adsorbable components and the non-recovered non-adsorbed components can be rejected to a third product stream at low pressure. The "intermediate pressure" of the second product stream may be lower than the pressure of the first feed gas stream, and greater than the "low pressure" of the third product stream. The three product streams may be generated without mixing the two feed streams upstream of the PSA unit, and without compressing the second feed stream to the pressure level of the first feed stream. This is different to other PSA processes or units handling two feed streams originating at different pressures. Typically, the lower pressure second feed stream would be compressed to the pressure of the first feed stream by a dedicated feed gas compressor, or the operating pressure of the PSA unit would be reduced to the lowest of both feed streams. In this way, the PSA unit set forth avoids the need for expensive and energy-intensive compressors. The PSA unit includes one or more outlets for exhausting at least a first product stream, a second product stream and a third product stream from the PSA unit or system. The outlets may be separate (for example one for each product stream) in some arrangements. In some cases, the PSA unit may include two inlets (one for each feed) and three outlets (one for each product).

It will be understood that numbering used to describe the product streams, for example first, second and third, is selected to facilitate clarity of description. The product streams may be renumbered if desired. For example, traditional two-product PSA units and processes may generate streams similar to the first and third product streams described herein, with the presently described three-product PSA unit including an additional product stream described herein as the "second product stream". In alternative arrangements, the "second product stream" (i.e. the stream containing most of the least adsorbable components) may be referred to as a third product stream, for example to provide a consistency of numbering to traditional PSA units.

In the context of the PSA units described herein, the feed and product streams are described as containing components categorized based on their adsorption characteristics. "Non-adsorbed components" can refer to species that exhibit minimal interaction with the adsorbent material in the PSA unit (for example the adsorbent bed) and can pass through the unit largely unaffected. Example non-adsorbed components include hydrogen and helium. Non-adsorbed components can remain largely unaffected by the adsorbent material even at high pressures. "Least adsorbed components" refers to species that have a low affinity for the adsorbent material in the PSA unit and are only slightly retained, for example at high pressures. Least adsorbed components are adsorbed more than the non-adsorbed components. Example least adsorbed components can include inert gases such as nitrogen, oxygen and argon. "Less adsorbed components" refers to species that show moderate adsorption in the PSA unit, meaning they are mostly or almost completely retained by the adsorbent material. Less adsorbed components can adsorb more than non-adsorbed and least adsorbed components. Example less adsorbed components can include carbon monoxide and methane. Finally, "heavily adsorbed components" refers to substances which have a high affinity for the adsorbent material and are significantly retained in the bed of the PSA unit. Example heavily adsorbed components can include water, carbon dioxide and hydrocarbons heavier (for example greater molecular mass) than methane. In this way, it will be understood that the terms "non-adsorbed", "least adsorbed", "less adsorbed" and "heavily adsorbed" describe relative adsorption characteristics or strengths of different components when using the same adsorbent material. They indicate how each component is adsorbed compared to the others, regardless of the specific type of adsorbent material employed in the PSA unit.

In some examples, the second feed stream has a high concentration of the non-adsorbable component, a lower concentration of the least adsorbable components, even lower concentration of the less adsorbable components, and zero concentration of the heavily adsorbable components. The purity of the second feed stream may be similar to the purity of streams from co-current depressurization steps. The second feed stream is available at a pressure that is intermediate between the pressures of the first product stream and the second product stream from the PSA process. For example, the second feed stream may be around the average pressure of the first product stream and second product stream, such as around 40% -70% of the pressure of the first product stream pressure. In other examples, the second feed stream may have a pressure that is as low as 15% of the first product stream pressure. E.g. for a first product stream pressure of 20 bar g and a second product stream pressure of 0.3 bar g, the second feed stream pressure can be around 10 bar g, or above 3 bar g and up to 15 bar g or higher. The flow rate of the second feed stream can be between 5% and 25% of the first feed stream.

The pressures of the feed and product streams may be ordered from high to low as follows: the first feed stream, the first product stream, the second product stream and the third product stream. Some streams may have pressures that are substantially the same as one another, for example the first feed stream and the first product stream. The pressure of the second feed stream may be less than that of the first feed stream and the first product stream, and may be greater than that of the third product stream. The pressure of the second feed stream may be less than or greater than that of the third product stream.

Recovering the hydrogen from this second feed stream would normally require compression from the lower pressure of the second feed stream to the comparatively higher pressure of the first feed stream, followed by mixing and then feeding the combined first and second feed streams to the feed inlet header of the PSA unit. But, in a PSA unit process according to aspects of the present disclosure, the PSA unit can be allowed to process a second feed stream that is available at an intermediate pressure and generate a third product stream at another intermediate pressure while still recovering the non-adsorbable component contained in the second feed gas to the first product stream at higher pressure. An additional benefit of the PSA unit and method is the reduction or elimination of less adsorbable components in the second product stream by the generation of the third product stream at an intermediate pressure. This improves the overall product recovery when all or part of the second product stream is recycled to the first or second feed gas stream.

A process according to one example can include the following steps. It will be understood that a PSA unit according to an example may be configured to carry out the following steps:
- Step A: Adsorption of impurities from feed gas (for example the first feed gas stream) at high pressure, delivering a first product stream at high pressure and high purity (for example high purity of non-adsorbed components).
- Step B: A first co-current depressurization - pressure equalization, transferring non-adsorbable component(s) to another vessel of the PSA unit at lower pressure in counter-current repressurization. Between 0 and 10 of these steps may be executed. For example, PSA units can have between 1 and 4, some have 0, some have up to 8. Together with non-adsorbable gas from void space, least adsorbable components can desorb and be transferred with the gas.
- Step C: A second co-current depressurization - provide purge, transferring non-adsorbable component to another vessel at a lowest pressure in counter-current purging. Together with non-adsorbable gas from void space, least adsorbable components can desorb and be transferred with the gas. Migration of heavy adsorbable components to higher adsorbent layer in the adsorbent beds is to be avoided and determine the end pressure level for this step.
- Step H: A third co-current depressurization - vent, transferring non-adsorbable component and least adsorbable component to a third product stream, available at intermediate pressure. The intermediate pressure can be determined by the end pressure of this step. This pressure can be set in such a way that the migration of heavily adsorbable components to higher adsorbent layer in the adsorbent beds can be avoided.
- Step D: Counter-current depressurization - blowdown. Depressurizing the vessel to the lowest pressure in the cycle, evacuating a first quantity of heavily adsorbable components to the second product stream at low pressure.
- Step E: Counter-current purging. A vessel at the lowest pressure can receive gas from the second co-current depressurization in which gas rich in a non-adsorbable component can be used to purge less and least adsorbable components from the adsorbent, delivering a second quantity of adsorbed components to the second product stream at low pressure. In a PSA process applying a PSA cycle in which the second co-current depressurization is replaced by the third co-current depressurization, the provide purge gas (for example gas from the second co-current depressurization) can be received from the second feed stream to the PSA unit.
- Step I: Co-current or counter-current repressurization - pre-pressurization. The adsorber vessel having completed the counter-current purging step can receive gas from the second feed stream to the PSA unit, to pressurize the adsorber vessel to a pressure not exceeding the pressure of the second PSA feed stream. The achievable pressure can depend on the available flow rate in the second PSA feed stream and the vessel volume.
- Step F: Counter-current repressurization - pressure equalization. Receiving non-adsorbable component from another vessel in the first co-current depressurization, recovering the non-adsorbable component to the product stream when this vessel re-enters the adsorption of impurities step.
- Step G1: Counter-current repressurization - final repressurization with product gas. Receiving part of the first product stream from the adsorption of impurities step to increase pressure back to the normal adsorption pressure of the first feed gas stream. In some examples, this step can be replaced or combined with the next step.
- Step G2: Co-current repressurization - final repressurization with feed gas. Receiving a part of the first feed gas to the adsorption of impurities step to increase the pressure back to the normal adsorption pressure of the first feed gas stream.

It will be understood that "co-current" refers to the flow direction of Step A, i.e. the flow direction through the adsorber vessel from first feed to first product. The term "counter-current" is then the opposite flow direction through the adsorber vessel. In some examples, co-current flow is from the bottom to the top of the adsorber and counter-current from the top to the bottom of the adsorber. In other examples, co-current flow is from the top to the bottom of the adsorber and counter-current from the bottom to the top of the adsorber. In examples with horizontal adsorbers, co-current can be from left to right and counter-current from right to left, or vice versa.

In some examples, the third co-current depressurization step (step H) can replace part of or fully replace the second co-current depressurization step (step C). In other examples, the third co-current depressurization step (step H) can replace the second co-current depressurization step (step C) and part of (or replace fully) the first co-current depressurization step (step B). The more that the third co-current depressurization step replaces the first co-current depressurization step and the second co-current depressurization step, the more of the least adsorbable components that may be rejected from the process, but also the more of the non-adsorbed component that may be lost with the third product stream. The amount of the third co-current depressurization step can be set by a designer of the PSA process, in line with the recovery requirements of a specific application. In other embodiments, for example in case availability of the second feed gas stream is temporarily reduced, the gas for the step of co-current or counter-current repressurization - pre-pressurization (step I) may be sourced as a slip stream of the first product stream generated by the adsorption of impurities step (step A). It will be understood that such an approach is temporary, for example, during start-up of the two feed three product PSA unit. In similar conditions, in another embodiment, the second feed stream may be used in its entirety for the step of co-current or counter-current repressurization - pre-pressurization (step I), while a slip stream of the first product stream from the adsorption of impurities step (step A) can be used instead of the stream from the second co-current depressurization step (step C) or the second feed stream for the step of counter-current purging (step E).

The origin of the second feed stream can vary. In some unusual and infrequent examples, an independent stream fulfilling the desired characteristics for the second feed stream may be available from a unit outside the hydrogen production unit. The stream with the desired characteristics for the second feed stream, however, can be made available for every PSA unit subject to the PSA process described above, by generating via a specific process utilizing the second product gas stream of the PSA unit. The second product stream at low pressure can include non-recovered, non-adsorbed components, and the balance of the adsorbable components.

The second product stream can be treated in a separate process, that provides the following:
- Recovers the majority of the non-adsorbed component, 65 % or more, such as 80%, 90%, 95%, 99% or more.
- Recovers a fraction of the least adsorbable component, 10% or less, such as 2% or less.
- Rejects the majority of the less adsorbable components, such as 99% or more.
- Rejects substantially all of the heavily adsorbable components, such as 99.9 % or more.

A process with these characteristics can generate a stream suitable to be used as second feed stream to the dual-feed three-product PSA unit and PSA process described herein.

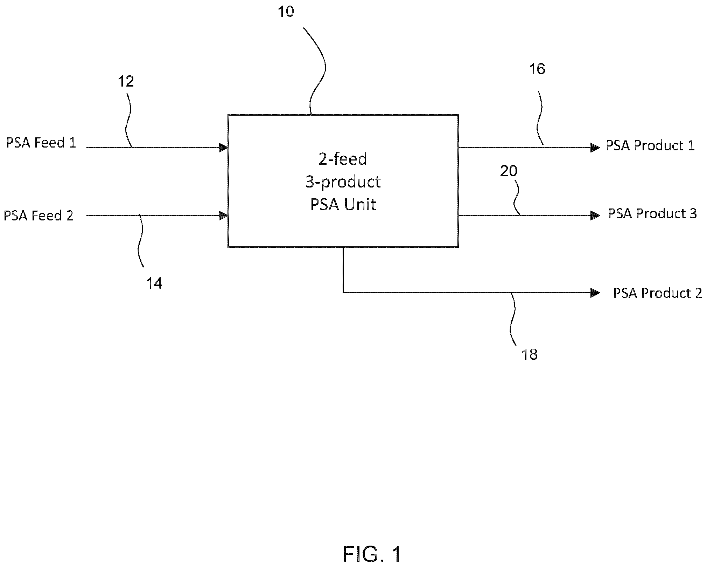

Figure 1 is a flow diagram of a PSA unit 10 according to one example of the present disclosure. The PSA unit 10 in Figure 1 can be integrated into a hydrogen plant and receive two feed streams and produce three product streams. In alternative arrangements, the PSA unit 10 may be integrated into an alternative plant that generates a hydrogen-containing stream which can be fed to the unit 10. Alternatively, the PSA unit 10 may be provided as a stand-alone unit provided with a hydrogen-containing feed.

The PSA unit 10 of Figure 1 is fed with a first feed gas stream 12 and a second feed gas stream 14. The PSA unit 10 is configured to generate a first product stream 16, a second product stream 18 and a third product stream 20. The feed gas streams 12, 14 and product streams 16, 18, 20 have been discussed herein and so will not be discussed in more detail.

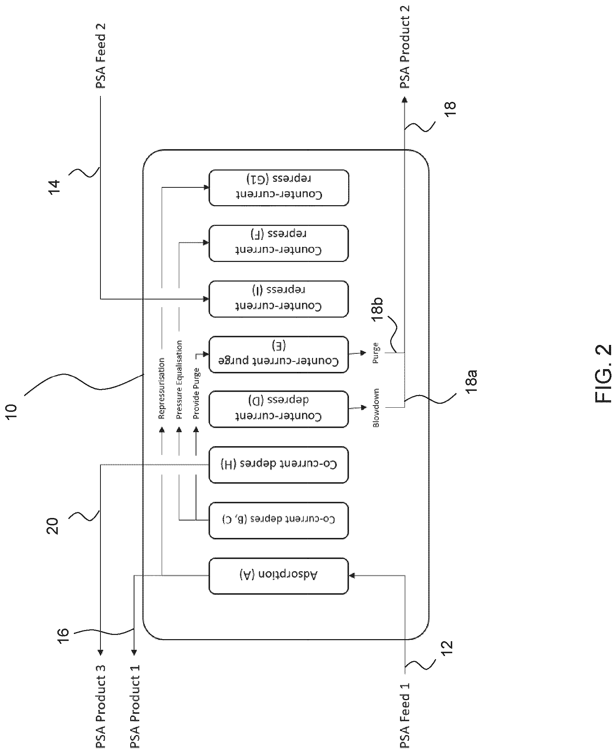

PSA units 10 according to various examples of the disclosure can have varying number and types of vessels installed in a physical unit. FIG. 2 is a block diagram of a PSA unit 10 that can process a first feed stream in one or more vessels in an adsorption step A, according to some aspects of the disclosure. In Figure 2, letters between brackets reference the process steps in the process description, though these may be implemented differently in other examples. The PSA unit of Figure 2 may be the same as that of Figure 1.

In Figure 2, a PSA unit 10 is shown that can process the first feed stream 12 in one or more vessels in the adsorption step (A). The adsorption step (A) can be followed by one or more co-current depressurization steps providing the gas for the pressure equalization steps (B, F) during which non-adsorbed gas can be transferred from a depressurizing vessel (B) into a repressurizing vessel (F). The step can be followed by one or more co-current depressurization steps (C) that supply the provide purge gas to regenerate one or more beds in counter-current purging step (E). This step can be followed by an additional co-current depressurization step (H) that generates the third PSA product stream 20. This step can be followed by a counter-current depressurization step (D) that can generate a first part 18a of the second PSA product stream 18 from its feed entry side, for example the entry side of the first feed stream. There can be one or more vessels in this step.

The gas leaving from the (first) feed entry side of the vessel(s) in counter-current purging step (E) can generate the second part 18b of the second PSA product stream 18. After the regeneration is complete, the second feed stream 14 can enter the PSA vessel from the first product side during the pre-pressurization step (I). The first product side can be a top side of the respective vessel in some arrangements, but may alternatively be a bottom side. The first feed entry side may be the opposite side of the respective vessel to the first product side, for example a bottom side of the respective vessel or a top side in arrangements in which the first product side is the bottom side. In an alternative embodiment of this invention, the second feed stream can enter from the first feed side (for example bottom side) during the pre-pressurization (step I). This step can be followed by one or more pressure equalization steps (F) receiving gas from a cocurrently depressurizing vessel (B). The final repressurization step (G1) to the pressure of the first PSA feed stream can be carried out with a slip stream of the first PSA product.

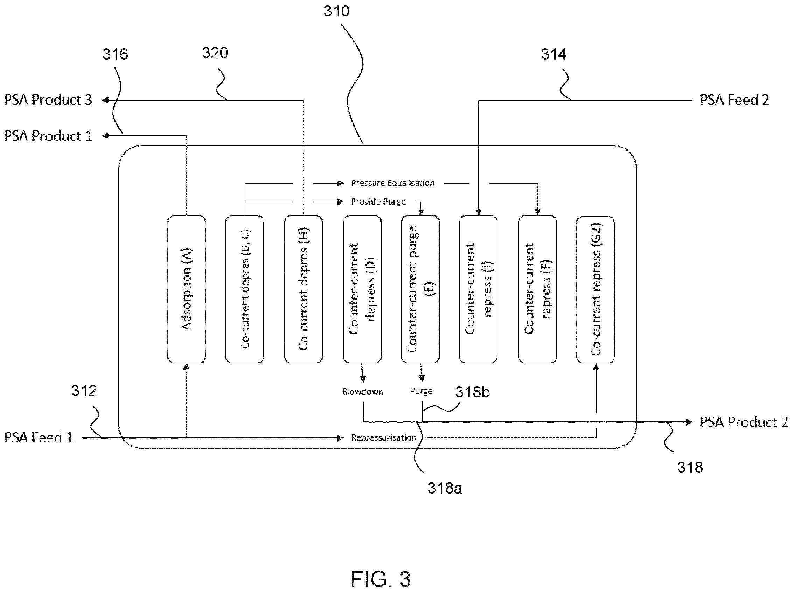

Figure 3 depicts a two-feed, three-product process flow of a PSA unit 310 using feed repressurization with a similar vessel process as in Figure 2, according to one example of the disclosure. Only the differences between the PSA unit 310 of Figure 3 and PSA unit 10 will be discussed in detail. Similar components have the same reference numeral with the prefix "3".

A difference between the process in Figure 3 as compared to Figure 2 is that the final repressurization step (G2) can be carried out with a slip stream of the first PSA feed stream. This PSA process can include both the steps (H) and (I).

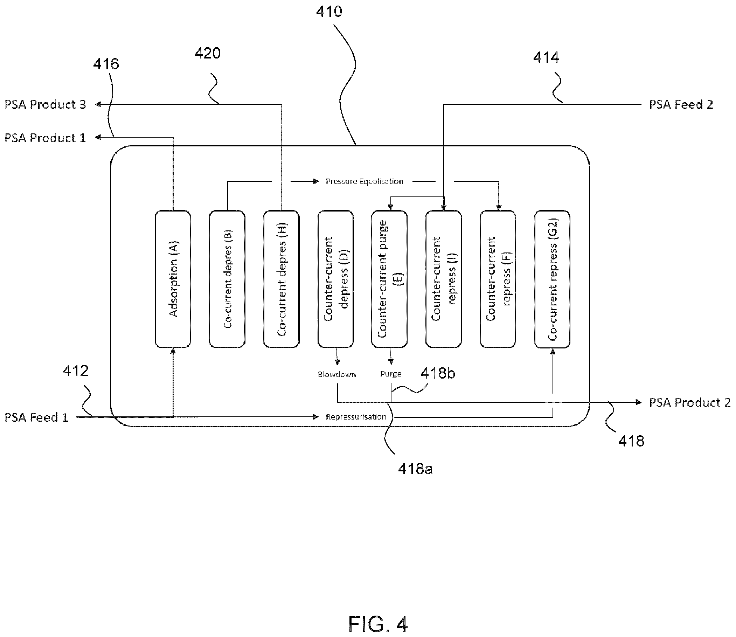

Figure 4 is a process flow diagram for a two-feed, three-product PSA unit 410 with feed repressurization and provide purge from the second feed, according to one example of the present disclosure. Only the differences between the PSA unit 410 of Figure 4 and previously described PSA units will be discussed in detail. Similar components have the same reference numeral with the prefix "4".

In the PSA unit shown in Figure 4, the co-current depressurization step to generate provide purge gas (C) used to regenerate one or more beds in counter-current purging (F) is not used. Instead, part of the second PSA feed stream 414 from step (I) is used as the provide purge stream, before being used as a pre-pressurization step.

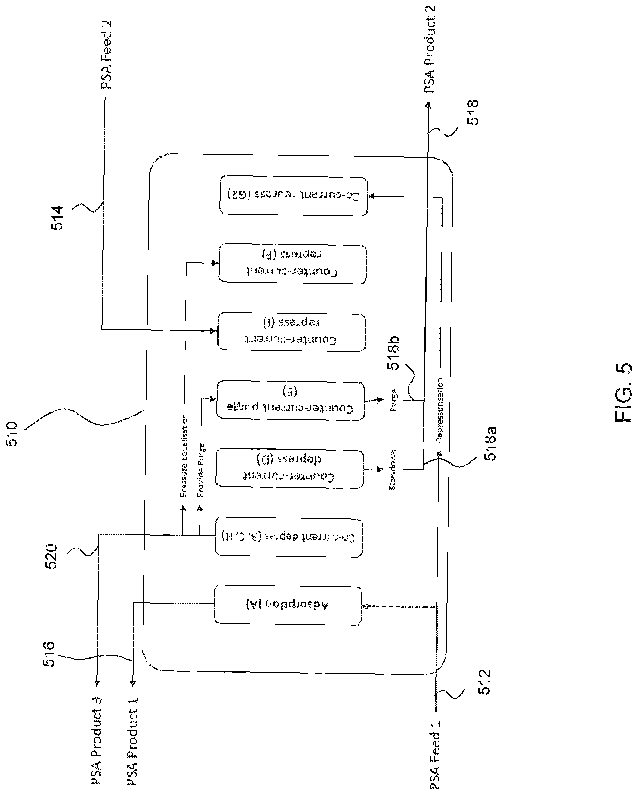

Figure 5 is a process flow diagram for a two-feed, three-product PSA unit with feed repressurization and simultaneous pressure equalization, providing at least one of provide purge or third product stream generation, according to example of the present disclosure. Only the differences between the PSA unit 510 of Figure 5 and previously described PSA units will be discussed in detail. Similar components have the same reference numeral with the prefix "5".

In Figure 5, the co-current depressurization steps B, C and H used to generate the pressure equalization and provide purge and the third PSA product stream 520, can occur simultaneously.

Various aspects of the present disclosure that can be used in any PSA process and performed by any PSA unit can include:
- Feed (G2) or product (G1) side repressurization.
- Elimination (for example full elimination) of co-current depressurization (C) and its full replacement by a part of second PSA feed stream 14 to the counter-current purging step (E), while transferring the gas normally sent as provide purge gas to counter-current purging step (E) to the generation of the third product stream 20 (H).
- Partial elimination of co-current depressurization (C) and its replacement (for example partial replacement) by a part of second PSA feed stream 14. Partial replacement may be to the counter-current purging step (E), while transferring the remainder part of the gas normally sent as provide purge gas to counter-current purging step (E) to the generation of the third product stream 20 (H).
- Simultaneous occurrence of co-current depressurization steps (B) and (C) followed by a separate third product generation step (H).
- Simultaneous occurrence of co-current depressurization steps (C) and third product generation step (H).
- Co-current or counter-current pre-pressurization step (I) using the second PSA feed stream 14.

Various aspects of the present disclosure provide the third product generation step (H) by co-current depressurization and also include the co-current or counter-current pre-pressurization step (I) from the second PSA feed stream 14. Various aspects of the present disclosure encompass both the third product 20 generation by co-current depressurization step (H) as well as the use of the second PSA feed stream 14 by the co-current or counter-current pre-pressurization step (I).

In the cases when the second PSA feed stream 14 is not available, for example during plant upsets or start-up, the second PSA feed stream 14 (I) can be substituted (for example temporarily) by a side-stream of the same flow rate taken from the first PSA product stream 16 generated during the adsorption step (A) to maintain continued operation of the PSA unit.

### Examples

The below performance tables illustrate performance (recovery fractions towards each product stream relative to the first feed stream) of PSA units according to some examples of the present disclosure, for example relative to the adsorption strengths of different component types in the PSA feed and product streams.

Firstly, performance tables of example prior art PSA units are indicated, to provide a baseline against which examples of PSA units of the present disclosure can be compared. In these tables, the first feed gas stream PSA feed 1 is used as a 100% reference for all components. Any value indicated in the tables for the product streams indicates which percentage of the corresponding components ends up in the specified product stream. For example, 2.5% of the least adsorbable components present in the first PSA feed gas stream will distribute to the first PSA product stream, with the remaining 97.5% distributing to the second PSA product stream for the PSA unit depicted in Table A that shows the performance of a two-product PSA unit of the prior art:

**Table A**

| | Non-adsorbed | Least-adsorbable | Less-adsorbable | Heavily adsorbable |
|---|---|---|---|---|
| PSA feed 1 | 100 % | 100 % | 100 % | 100 % |
| PSA product 1 | 88 % | 2.5 % | 0 % | 0 % |
| PSA product 2 | 12 % | 97.5 % | 100 % | 100 % |

Table B shows the performance of a two-product PSA unit in which PSA product 2 is recycled to an upstream process, for example resulting in an accumulation of the least-adsorbable components that reduces the recovery of the non-adsorbed components to the first product:

**Table B**

| | Non-adsorbed | Least-adsorbable | Less-adsorbable | Heavily adsorbable |
|---|---|---|---|---|
| PSA feed 1 | 100 % | 100 % | 100 % | 100 % |
| PSA product 1 | 83 % | 2.5 % | 0 % | 0 % |
| PSA product 2 | 17 % | 97.5 % | 100 % | 100 % |

Table C shows the performance of a two-product PSA unit in which more slippage of the least-adsorbable impurities to PSA Product 1 is applied to overcome the accumulation when PSA Product 2 is recycled. As can be seen, this significantly reduces the purity of PSA product 1, which is not always acceptable or desired:

**Table C**

| | Non-adsorbed | Least-adsorbable | Less-adsorbable | Heavily adsorbable |
|---|---|---|---|---|
| PSA feed 1 | 100 % | 100 % | 100 % | 100 % |
| PSA product 1 | 88 % | 34 % | 0 % | 0 % |
| PSA product 2 | 12 % | 66 % | 100 % | 100 % |

Table D shows the performance of a 3-product PSA in which part of accumulating least adsorbable components is vented. This facilitates a reduction of the slip of least adsorbable components in PSA product 2, at the cost of a reduced recovery of the non-adsorbed components to PSA product 1. Due to the reduced accumulation of the least-adsorbable components, this process can maintain a reduced level of accumulation of the least-adsorbable components in the recycle loop of PSA product 2.

**Table D**

| | Non-adsorbed | Least-adsorbable | Less-adsorbable | Heavily adsorbable |
|---|---|---|---|---|
| PSA feed 1 | 100 % | 100 % | 100 % | 100 % |
| PSA product 1 | 81 % | 2.5 % | 0 % | 0 % |
| PSA product 2 | 11.5 % | 65 % | 99.5 % | 100 % |
| PSA product 3 | 7.5 % | 32.5 % | 0.5 % | 0 % |

In the first example, performance of a two-feed, three-product PSA unit, where PSA feed gas stream 2 can be used to vent more of the least adsorbable components, is shown in Table 1:

**Table 1**

| | Non-adsorbed | Least-adsorbable | Less-adsorbable | Heavily adsorbable |
|---|---|---|---|---|
| PSA feed 1 | 100 % | 100 % | 100 % | 100 % |
| PSA feed 2 | 7 % | 1 % | 0 % | 0 % |
| PSA product 1 | 87 % | 2.5 % | 0 % | 0 % |
| PSA product 2 | 11.5 % | 59 % | 99.5 % | 100 % |
| PSA product 3 | 8.5 % | 39.5 % | 0.5 % | 0 % |

In the second example, a degree of freedom to the operation of the PSA unit is reflected. For example, the flow rate of the second PSA feed gas stream can be changed. In case the purity of this stream is constant and the stream is sufficiently high in availability, then the recovery of the non-adsorbed hydrogen can be pushed back to the original value of a two-product PSA unit, while maintaining the reduced slippage of the least adsorbable component to a second PSA product stream.

**Table 2**

| | Non-adsorbed | Least-adsorbable | Less-adsorbable | Heavily adsorbable |
|---|---|---|---|---|
| PSA feed 1 | 100 % | 100 % | 100 % | 100 % |
| PSA feed 2 | 8 % | 1.5 % | 0 % | 0 % |
| PSA product 1 | 88 % | 2.5 % | 0 % | 0 % |
| PSA product 2 | 11.5 % | 62 % | 99.5 % | 100 % |
| PSA product 3 | 8.5 % | 37 % | 0.5 % | 0 % |

As can be seen, the PSA units described facilitate for a recovery of non-adsorbable components similar to the baseline performance of the two-product PSA units of Tables A-C, while still rejecting least adsorbable components from the second product stream, which is an improvement over the three-product PSA of Table D.

Various aspects of the present disclosure can achieve similar performance as a two-product PSA unit without recycle, with respect to the non-adsorbed species recovery and PSA product 1 purity, when used in a process flow scheme involving the recycle of part or all of PSA product 2. That is, various aspects can be used to eliminate drawbacks of the reduced PSA product 1 purity or reduced non-adsorbed species recovery of the alternative PSA configurations installed in a process flow scheme with recycle.

For process flow schemes in which the second PSA feed stream is generated from the second PSA product stream, similar performance can be achieved. In Example 1, PSA product 2 contains 11.5% of the non-adsorbed components and 59% of the least-adsorbable components, together with nearly 100% of the other components. A process can be used to recover 7% of the non-adsorbed component from the available 11.5%, including 1% of the available 59% least-adsorbable components, while rejecting the heavier components. And, recovering more of the non-adsorbed component is possible, but more of the least-adsorbable component can be recovered, as demonstrated in Example 2. In case the second PSA feed stream is not generated from the second PSA product stream, the amount of non-adsorbed species that can be recovered may be limited by the availability of the second PSA product stream. For either configuration, various aspects of the present disclosure can avoid the installation of a compressor to boost the pressure of the second PSA feed stream to the level of the first PSA feed stream, which can reduce the complexity of the PSA unit flow scheme, and can eliminate the potential unavailability of the second PSA feed stream due to a compressor failure.

During situations in which the second feed stream may not be available, such as start-up of the two-feed, three-product PSA unit, the performance of the PSA unit in rejecting least-adsorbable components from the recycle loop can be maintained by using the same flow rate of first PSA product stream as the second PSA feed stream, until the second PSA feed stream becomes available. During this time, the recovery of the non-adsorbed species can be reduced by the same amount, but this can be acceptable during start-up or other temporary upset conditions.

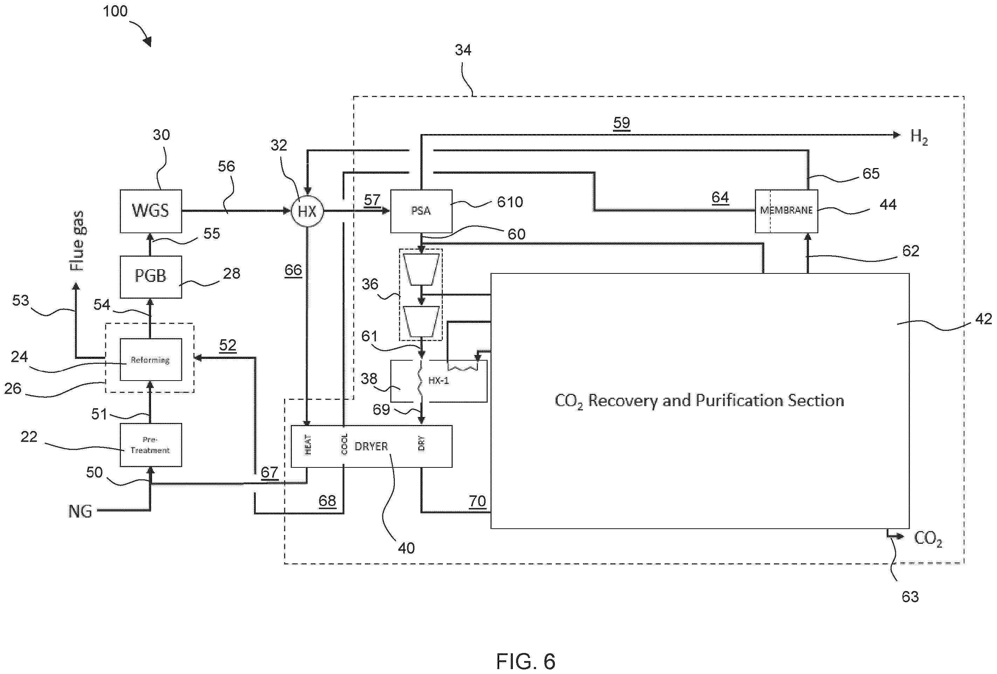

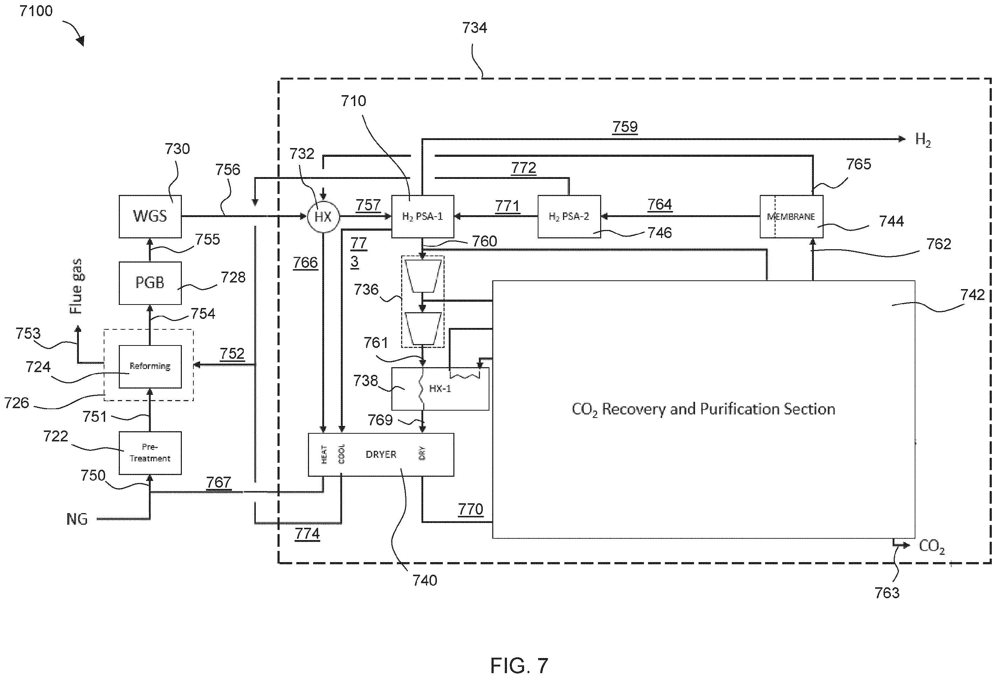

A PSA unit according to various aspects of the invention can be integrated into a hydrogen plant 100 that includes various components for processing input streams. Figure 6 and Figure 7 are block diagram of hydrogen plant 100 that can include a PSA unit 610, 710 according to various aspects of the present disclosure.

The hydrogen plant 100 in Figures 6 and 7 can include:
- A pre-treatment subsystem 22, 722 that is configured to treat a hydrocarbon feed 50, 750 to remove impurities that can damage downstream catalysts. Non-exhaustive examples of impurities can include sulfur, halogens, chlorides, and mercury. The hydrocarbon feed stream 50, 750 may include fresh feed (labelled NG in the figures) and/or hydrocarbons from one or more recycle lines from elsewhere in the plant 100, 7100. The pre-treatment subsystem 22, 722 may generate a pre-treated hydrocarbon feed stream 51, 751.
- A reforming section 24, 724 configured to receive a hydrocarbon feed and mix it with steam to cause the mixture to react in the reforming section 24, 724 to produce a syngas stream 54, 754. The hydrocarbon feed may be provided from a hydrocarbon feed stream 50, 750 (for example containing fresh and/or recycled hydrocarbons). In arrangements in which the pre-treatment subsystem 22, 722 is provided, the hydrocarbon feed may be or include the pre-treated hydrocarbon stream 51, 751 from the pre-treatment subsystem 22, 722. The reforming section 24, 724 can include one or more of pre-reforming, steam-methane reforming, heat-exchange reforming, or auto-thermal reforming.
- A fired heater 26, 726, represented by a dotted line around the reforming section 24, 724 can supply at least part of the heat of reaction for the reforming section 24, 724 by combusting a fuel stream 52, 752 with a stream containing an amount of oxygen (not shown) to achieve complete combustion. The fired heater 26, 726 generates a flue gas stream 53, 753 that exits the fired heater 26, 726.
- A flue gas convection section (not shown in Figures 6 and 7) can recover heat from the hot flue gas stream 53, 753 from the fired heater 26, 726 and can use the heat to generate steam and/or heat other process streams in the hydrogen plant 100, 7100 and/or to provide heat for endothermic reactions (for example in the reformer section 24, 724).
- A heat recovery system which can be or include a process gas boiler 28, 728, represented as "PGB" in Figures 6 and 7, can use syngas, for example the syngas stream 54, 754 from the reforming section 24, 724 to cool down to generate steam or exchange heat with respect to other process streams. The process gas boiler generates a cooled syngas stream 55, 755.
- A water-gas shift (WGS) section 30, 730, represented as "WGS" in Figures 6 and 7, can receive syngas from the heat recovery system (for example the cooled syngas stream 55, 755 from the PGB 28, 728) and apply at least one step of water-gas-shift reaction conversion to the syngas. The water-gas shift can include capabilities, such as at least one of the high temperature shift, medium temperature shift, low temperature shift, and isothermal shift. The WGS section 30, 730 can generate a shifted syngas stream 56, 756.
- A heat exchanger and condensate removal section 32, 732, represented as "HX" in Figures 6 and 7, can cool syngas from the WGS section 30, 730 (for example from the shifted syngas stream 56, 756) against other process streams, and can remove condensate from the syngas, to produce a water-saturated syngas stream 57, 757 and a process-condensate stream (not shown). The heat exchanger 32, 732 may be provided as part of the heat recovery system
- A hydrogen and carbon dioxide (CO2) recovery section 34, 734 can be arranged to receive the water-saturated syngas stream 57, 757 from the heat exchanger and condensate removal section 32, 732. The hydrogen and CO2 recovery section 34, 734 can include a dryer system, and a PSA unit 610, 710 according to various aspects of the present disclosure. The PSA unit 610, 710 may be configured to generate at least a hydrogen-rich product stream 59, 759 and a hydrogen-depleted purge gas stream 60, 760. The hydrogen and CO2 recovery section 34, 734 may include a PSA purge gas compressor 36, 736 (shown below the PSA unit 610, 710 in the figures). The compressor 36, 736 is provided downstream of the PSA unit 610, 710. The compressor 36, 736 may be configured to increase the pressure of the hydrogen-depleted purge gas stream 60, 760 from the PSA unit 610, 710 to form a compressed hydrogen-depleted purge gas stream 61, 761. The recovery section 34, 734 may include a PSA purge gas cooling unit and condensate removal system 38, 738 (represented as "HX-1" in Figures 6 and 7). The cooling unit 38, 738 is configured to cool the compressed stream 61, 761 from the compressor 38, 738 to condense and remove part of its water content to form a cooled stream 69, 769. A dryer system 40, 740 that is a temperature-swing adsorption dryer system may be provided. The dryer system 40, 740 is configured to remove the remaining water from the hydrogen-depleted purge gas stream from the PSA unit 610, 710 (for example from the cooled stream 69, 769 cooled by the cooling unit 38, 738) to produce a water-depleted product stream 70, 770. A CO2 recovery and purification section 42, 742 may be included that can use condensation and separation at sub-zero temperatures to separate the water-depleted product stream 70, 770. The recovery section 34, 734 may include a membrane system 44, 744.
   o The CO2 recovery and purification section 42, 742 can generate at least a hydrogen-rich product stream 62, 762 and a CO2-rich product stream 63, 763, but in some cases can also generate additional product streams.
   o The membrane system 44, 744 can be fed with the hydrogen-rich product stream 62, 762. The membrane system 44, 744 can be configured to permeate hydrogen, generating a hydrogen-rich permeate stream 64, 764 and a hydrogen-depleted retentate stream 65, 765.
   o The hydrogen-depleted retentate stream 65, 765 from the membrane system 44, 744 can be heated (for example in the heat exchanger 32, 732 of the heat recovery system) to form a hot regeneration gas stream 66, 766 for the dryer system 40, 740 to be used during the heating phase of its regeneration. Spent hot regeneration gas from the heating phase of the dryer regeneration process can exit the dryer system 40 as a spent hot regeneration gas stream 67, 767 and be recycled to the inlet of the reforming section 14, 714 of the hydrogen plant 100, 7100 and/or to the inlet of the pre-treatment subsystem 12, 712.
   o In Figure 6, the hydrogen-rich permeate stream 64 from the membrane system 34 can be fed to the dryer system 40 as regeneration gas to be used during the cooling phase of its regeneration. The spent regeneration gas from the cooling phase of the dryer regeneration process can exit the dryer system 40 as a spent regeneration gas stream 68 and can be used as fuel in the fired heater 26, for example mixed with or forming fuel stream 52.
   o The drying unit 40, 740 is configured to remove remaining water from the hydrogen-depleted purge gas stream 60, 760 (for example from the cooled stream 69, 769).

The PSA unit of Figure 6 shows a single feed two product PSA unit, but it will be appreciated that a dual feed, three product PSA unit as described herein may be integrated into the hydrogen plant in a similar way, for example as described in the following in relation to in Figure 7. The hydrogen plant 7100 of Figure 7 is similar to that of Figure 6 and so only the differences will be discussed in detail. Similar components have the same reference numeral with the prefix "7".

In the arrangement of Figure 7, a dual feed, three-product PSA unit 710 is provided (indicated as H2 PSA-1 in Figure 7). In this arrangement the two-feed, three-product PSA unit 710 is configured to be fed with the water-saturated syngas stream 757. In this way, the first feed gas stream (for example stream 12 in Figure 1) is the water-saturated syngas stream 757 from the heat exchanger and condensate removal section 732. In this example, the hydrogen-rich permeate steam 764 from the membrane system 744 is fed to a second PSA unit 746 (indicated as H2 PSA-2 in Figure 7). The second PSA unit 746 is configured to generate a high-pressure product stream 771 and a low-pressure purge gas stream 772. The high-pressure product stream 771 may be enriched in hydrogen but depleted in carbon components. The high-pressure product stream 771 may be at a pressure close to the pressure of the permeate stream 764. The low-pressure purge gas stream 772 may be depleted in hydrogen. The low-pressure purge gas stream 772 may be used as a fuel in the fired heater 726. The high-pressure product stream 771 is directed to the dual feed three product PSA unit 710 as the second feed gas stream (for example stream 14 in Figure 1). The high-pressure product stream 771 may be at a lower pressure than the water-saturated syngas stream 757.

In Figure 7, the first product stream (for example stream 16 of Figure 1) of the PSA unit 710 is the hydrogen-rich product stream 759. The second product stream (for example steam 18 of Figure 1) is the hydrogen-depleted purge stream 760 that may be directed to the dryer system 710 (for example via the compressor 736 and/or the cooling unit 738) to generate a dry gas 770 that is fed into the CO2 recovery and purification section 742.The third product stream 773 (for example stream 20 of Figure 1) is generated during a co-current depressurization step. The third product stream 773 may contain rejected inert gas components and hydrogen that can be used as low-carbon fuel. In this example, the third product stream 773 is used as a cooling medium 773 in the dryer system 740. The spent cooling medium gas 774 can exit the dryer system 740 and be used as fuel in the fired heater 726.

Splitting the permeate stream 764 using the second PSA 746 and a 2-feed, 3-product PSA unit 710 results in sending the same quantity of carbon molecules to the fuel stream 752, while entraining additional inert gas molecules from PSA unit 710 into the third product stream 773 avoiding their entry to the CO2 recovery and purification section 742 with PSA purge gas stream 760, thereby reducing the power consumption of compressor 736 and simultaneously recovering more hydrogen into hydrogen product stream 759.

A hydrogen plant in which a PSA unit according to various examples of the present disclosure can include additional components, differently configured components, fewer components, or other subsections or technologies than that represented in Figure 6 and Figure 7.

Examples of pressure and temperature values and/or ranges of the various streams of Figure 6 are shown in Table 3. It will be appreciated that these values are provided as examples only, and different pressures and temperatures may be obtained in alternative arrangements.

**Table 3**

| Stream | Temperature (°C) | Pressure (bar g) |
|---|---|---|
| Spent hot regeneration gas, 67 | 100-300 | 35.5 |
| Fuel stream, 52 | 40-300 | 0.3 |
| Water-saturated syngas, 57 | 40 | 21.2 |
| Hydrogen-depleted purge gas, 60 | 30 | 0.3 |
| Compressed hydrogen-depleted purge gas, 61 | 40 | 62 |
| Cooled stream, 69 | 15 | 61 |
| Water-depleted product, 70 | 20 | 60 |
| Hydrogen-rich product, 62 | 30-70 | 41 |
| Hydrogen-rich permeate, 64 | 35 | 3 |
| Hydrogen-depleted retentate, 65 | 30-70 | 39 |
| Hot regeneration gas, 66 | 300 | 37 |
| Spent regeneration gas, 68 | 40-300 | 2 |
| Hydrogen-rich product stream, 59 | 45 | 20 |

Examples of pressure and temperature values and/or ranges of the various streams of Figure 7 are shown in Table 4. It will be appreciated that these values are provided as examples only, and different pressures and temperatures may be obtained in alternative arrangements.

**Table 4**

| Stream | Temperature (°C) | Pressure (bar g) |
|---|---|---|
| Spent hot regeneration gas, 767 | 100-300 | 35.5 |
| Fuel stream, 752 | 40-300 | 0.3 |
| Water-saturated synqas, 757 | 40 | 21.2 |
| Hydrogen-depleted purge gas, 760 | 30 | 0.3 |
| Compressed hydrogen-depleted purge gas, 761 | 40 | 62 |
| Cooled stream, 769 | 15 | 61 |
| Water-depleted product, 770 | 20 | 60 |
| Hydrogen-rich product, 762 | 30-70 | 41 |
| Hydrogen-rich permeate, 764 | 30 | 10 |
| Hydrogen-depleted retentate, 765 | 30-70 | 39 |
| High-pressure product, 771 | 35 | 9 |
| Low-pressure purge gas, 772 | 25 | 0.3 |
| Coolinq medium, 773 | 35 | 3 |
| Spent cooling medium gas, 774 | 40-300 | 2 |
| Hot regeneration gas, 766 | 300 | 37 |
| Hydrogen-rich product stream, 759 | 45 | 20 |

Various stream names have been used for purposes of clarity, containing terms such as "rich", "enriched", "depleted" and the like. It will be appreciated that these terms are intended to be non-limiting, and may be referred to by alternative names, such as outputs of the respective unit.

In some examples, streams referred to as "hydrogen-rich" or "hydrogen enriched" contain more hydrogen (by mol %) than CO2. Streams referred to as "hydrogen-depleted" may contain less hydrogen than CO2. Terms such as "CO2-rich", "CO2 enriched" may describe streams containing more CO2 (by mol %) than hydrogen. "CO2 depleted" may refer to streams containing less CO2 than hydrogen.

Hydrogen product streams from the plant, such as hydrogen-rich product stream 59, 759 may have H2 concentrations of 99 mol% or higher, e.g. 99.5 mol%, 99.9 mol%, 99.99 mol% or higher. CO2 product streams from the plant, such as CO2-rich product stream 63, 763, may have CO2 concentrations of 95 mol% or high, for example 99 mol%, 99.5 mol%, 99.9 mol%, 99.99 mol% or higher.

Stream 771 that is enriched in hydrogen may refer to a hydrogen concentration in excess of 50 mol%, optionally in excess of 70 mol%, in excess of 80 mol% or in excess of 90 mol%, or in excess of 98 mol%, such as 99 mol%. Terms such as "rich" and "depleted" to refer to PSA product streams are generally relative to the PSA feed streams. In this way, "rich" indicates an increase in the respective component's concentration compared to the feed, and "depleted" refers to a decrease in the respective component's concentration, relative to the concentration of the same component in the feed inlet stream.

References to pressures in stream names is also intended to provide clarity. These terms are intended to be non-limiting, and may be referred to by alternative names, such as outputs of the respective unit. References to "high pressure" may refer to a pressure in excess of 5 bar g, optionally 15 bar g to 25 bar g or higher up to 35 bar g, but can go as high as 55 to 80 bar g in some applications. With respect to the PSA unit, "high pressure" may be required for the first PSA feed gas stream 12, to drive the adsorption step that is facilitated at a higher pressure. References to "low pressure" is intended to mean lower than the "high pressure", for example that is required for the PSA feed gas and/or adsorption steps. When related to the PSA purge gas or lowest pressure stream (e.g. second feed gas stream 14), this typically refers to a pressure near atmospheric pressure, such as 0.3 to 0.5 bar g, exceptionally up to 1 or 4.5 bar g. In some arrangements, "low pressure" refers to pressures below atmospheric pressure, for example vacuum conditions. This sub-atmospheric pressure could be between 0.1 to 0.99 bar absolute. This pressure may be required for the purging step, during which the adsorbed components need to desorb which is facilitated by a lower pressure. "Intermediate pressure" as used herein refers to a pressure level between the "low" and "high" pressure levels in the PSA unit. Intermediate pressure typically refers to pressures in the order of 2 - 4 bar g, and typically less than half of the pressure of the first feed step to benefit from some desorption effects. In this way, it will be understood that "high pressure" is greater than "intermediate pressure", which is greater than "low pressure".

The foregoing description of the disclosure, including illustrated aspects and examples has been presented only for the purpose of illustration and description and is not intended to be exhaustive or to limit the disclosure to the precise forms disclosed. Numerous modifications, adaptations, and uses thereof will be apparent to those skilled in the art without departing from the scope of this disclosure. Aspects and features from each disclosed example may be combined with any other example.

## Claims

1. A method for producing a plurality of product gas streams by a pressure swing adsorption (PSA) unit, the method comprising:
receiving a first feed gas stream having a first pressure;
receiving a second feed gas stream having a second pressure that is lower than the first pressure;
producing at least a first product stream, a second product stream, and a third product stream without compressing the second feed gas stream to a pressure level corresponding to the first pressure.

2. The method of claim 1, wherein the first feed gas stream comprises non-adsorbed components, least adsorbable components that include inert gases, less adsorbable components that include methane, and heavily adsorbable components that include carbon dioxide,
wherein the second feed gas stream comprises non-adsorbed or least adsorbable components.

3. The method of claim 2, wherein the non-adsorbed components comprise hydrogen and helium, the least adsorbable components comprise one or more of nitrogen, oxygen and argon, the less adsorbable components comprise one or more of carbon monoxide and methane, and wherein the least adsorbable components comprise one or more of water, carbon dioxide and hydrocarbons heavier than methane.

4. The method of claim 2 or claim 3, wherein producing at least the first product stream, the second product stream, and the third product stream without compressing the second feed gas stream to the pressure level corresponding to the first pressure comprises:
recovering the non-adsorbed components with a high purity to the first product stream;
recovering least adsorbable components to the second product stream at a pressure level that is lower than the pressure of the first product stream; and
rejecting remaining components and non-recovered, non-adsorbing components to the third product stream at another pressure lever that is lower than the pressure of the second product stream.

5. The method of any preceding claim, further comprising processing the first feed gas stream and the second feed gas stream according to a PSA process that includes steps selected from the group consisting of:
adsorption of impurities from feed gas at high pressure;
a first co-current depressurization and pressure equalization;
a second co-current depressurization and providing purge;
a third co-current depressurization and vent;
counter-current depressurization and blowdown;
counter-current purging;
co-current or counter-current repressurization and pre-pressurization;
counter-current repressurization and pressure equalization;
counter-current repressurization and final repressurization with product gas; and
co-current repressurization and final repressurization with feed gas.

6. The method of claim 5, comprising the adsorption of impurities step, wherein the impurities are adsorbed from the first feed gas stream at a high pressure and generating the first product stream at a high pressure; wherein the method optionally comprises the third co-current depressurization and vent step to generate the third product stream at an intermediate pressure.

7. The method of claim 5 or claim 6, comprising the counter-current depressurization and blowdown step to generate a first part of the second product stream at a low pressure; wherein the method optionally comprises the counter-current purging step to generate a second part of the second product stream at a low pressure.

8. The method of any of claims 5 to 7, comprising the co-current or counter-current repressurization and pre-pressurization step using the second feed gas stream that has a pressure lower than a pressure of the first feed gas stream.

9. The method of any of claims 5 to 8, wherein the counter-current repressurization and final repressurization step is with the first product stream and/or wherein the co-current repressurization and final repressurization step is with the first feed gas stream.

10. The method of any of claims 5 to 9, comprising the counter-current purging step, wherein at least part of the second feed gas stream that has a pressure lower than the pressure of the first feed gas stream is used during the counter-current purging step to generate a second part of the second product stream at a low pressure.

11. The method of any preceding claim, wherein the PSA unit is installed in a hydrogen plant.

12. The method of any preceding claim, wherein the hydrogen plant includes a temperature-swing adsorption dryer system integrated therein for recovering waste heat and water vapor, wherein the method further comprises:
receiving, by the temperature-swing adsorption dryer system, regeneration gas from a downstream unit of the hydrogen plant;
using, by the temperature-swing adsorption dryer system, heat from the hydrogen plant to heat at least a part of the regeneration gas and form spent regeneration gas through a heating step and a cooling step;
recycling spent regeneration gas back to the hydrogen plant that uses heat from the spent regeneration gas and the cooling step; and
using desorbed water in the spent regeneration gas as process steam in the hydrogen plant.

13. The method of any preceding claim, wherein the PSA unit is a two-feed, three product PSA unit.

14. A pressure swing adsorption (PSA) unit comprising:
one or more inlets for introducing a first feed gas stream and a second feed gas stream into one or more vessels of the PSA unit, the first feed gas stream having a first pressure and the second feed gas stream having a second pressure that is lower than the first pressure;
at least one adsorbent bed provided in a vessel, the at least one adsorbent bed configured to adsorb components of the first feed gas stream and/or the second feed gas stream;
one or more outlets for exhausting at least a first product stream, a second product stream and a third product stream from the one or more vessels;
wherein the PSA unit is configured such that the first product stream, second product stream and third product stream are generated from the first and second feed gas streams without compressing the second feed gas stream to a pressure level corresponding to the first pressure.

15. A hydrogen plant comprising the PSA unit of claim 14.
